# FASCICULE DE BREVET EUROPEEN

(11) **EP 0 754 914 B1**
(45) Date de publication et mention de la délivrance du brevet: **18.04.2001**
(21) Numéro de dépôt: 95201982.6
(22) Date de dépôt: 19.07.1995
(51) Int. Cl.: F23D 14/60, F23N 1/00, F16K 31/126

(54) **Dispositif d'injection pour bruleur atmosphérique à gaz d'appareil de chauffage notamment du type à infrarouge**
Einspritzvorrichtung für atmosphärische Gasbrenner von Heizgeräten, insbesondere des Infrarottyps
Atmospheric gas burner injecting device, in particular for infrared type heaters

(43) Date de publication de la demande: 22.01.1997
(73) Titulaire: CENTRE D'ETUDE ET DE REALISATIONS D'EQUIPEMENT ET DE MATERIEL (C.E.R.E.M.) S.A.R.L., F-47310 Laplume (FR)
(72) Inventeur: Sirand, Joseph, F-47310 Laplume (FR)
(74) Mandataire: Morelle, Guy Georges Alain

(56) Documents cités:
- EP-A- 0 489 720
- EP-A- 0 635 679
- FR-A- 1 177 740
- US-A- 2 572 675
- US-A- 4 793 798

## Description

L'invention concerne un dispositif d'injection pour brûleur atmosphérique à gaz d'appareil de chauffage, notamment du type à infrarouge, comportant une conduite d'amenée d'air dotée d'une embouchure d'entrée d'air et d'un élément Venturi, ledit dispositif d'injection étant du type comprenant des moyens d'injection disposés dans la conduite d'amenée d'air de chaque brûleur, en amont de l'élément Venturi.

Dans l'état actuel de la technique, les brûleurs fonctionnant en basse pression, c'est-à-dire à une pression généralement inférieure à 500 mbars, sont affectés par une détérioration de la qualité de la combustion si la pression d'alimentation descend au-dessous de la valeur nominale pour laquelle ils ont été conçus.

En effet, l'équilibre du dosage entre le gaz carburant injecté et l'air comburant aspiré ne reste satisfaisant que dans les limites d'une plage restreinte au-dessous de la pression nominale.

Cet état de fait interdit l'utilisation d'une régulation par variation dégressive de la pression d'alimentation jusqu'à un ralenti minimum et conduit à utiliser une régulation "tout ou rien" nécessitant alors un réallumage électrique ou un dispositif de veilleuse.

Il est à noter que cet inconvénient relatif à l'impossibilité d'obtenir une grande plage de régulation par variation de la pression nominale, sans entraîner une détérioration de la qualité de combustion, s'atténue et s'efface rapidement lorsque les appareils sont prévus pour fonctionner à des pressions supérieures à 1 Bar. La plage de bonne carburation s'élargit en effet lorsque la pression s'élève, et ainsi, avec des appareils prévus, par exemple, pour fonctionner à une pression de 1,4 Bar en régime nominal, on peut diminuer la pression jusqu'à une pression de ralenti de 0,02 Bar.

Le problème concerne donc les appareils "basse pression" soit, à titre d'exemple, un appareil fonctionnant à une pression nominale de 100 ou 150 mbars pour lequel l'admission d'air aspiré et l'injection de gaz débité par l'injecteur ne restent pas proportionnelles sur une plage de pression descendant au-dessous de 50 % du régime nominal.

Une première solution visant à répondre à ce problème a été proposée dans le brevet EP-0.635.679 qui décrit un appareil de chauffage à infrarouge dont les moyens d'injection comprennent au moins deux injecteurs : un injecteur de premier étage constamment alimenté en gaz et calibré de façon à donner un débit d'injection correspondant au régime ralenti, et au moins un deuxième injecteur dont l'alimentation en gaz est modulée de façon à obtenir la puissance désirée.

La présente invention vise également à solutionner ce problème a pour objectif essentiel de fournir un dispositif d'injection permettant d'obtenir une bonne carburation des brûleurs atmosphériques à gaz prévus pour fonctionner en régime nominal basse pression, lorsqu'on désire moduler leur régime jusqu'à un ralenti minimal à partir de la pression nominale.

A cet effet, l'invention vise un dispositif d'injection pour brûleur atmosphérique à gaz d'appareil de chauffage, notamment du type à infrarouge, comprenant une conduite d'amenée d'air dotée d'une embouchure d'entrée d'air et d'un élément Venturi, et des moyens d'injection disposés dans la conduite d'amenée d'air de chaque bruleur, en amont de l'élément Venturi, lesdits moyens d'injection comprenant :
- un tube porte-injecteur portant, vers une de ses extrémités, un injecteur doté d'une buse d'injection calibrée, et solidarisé, vers son extrémité opposé, sur un corps de vanne comportant un orifice de raccordement sur une canalisation d'alimentation en gaz et un conduit de liaison entre ledit orifice et le tube porte-injecteur,
- une tige logée dans le tube porte-injecteur et de diamètre inférieur au diamètre intérieur de ce dernier, ladite tige présentant, vers son extrémité côté injecteur, une aiguille dotée d'une pointe conçue pour pouvoir pénétrer à l'intérieur dudit injecteur,
- des moyens de régulation aptes à réguler la pression du gaz délivré à l'intérieur du tube porte-injecteur en fonction de données de régulation de température,

Selon l'invention, ces moyens d'injection comprennent, en outre, :
- des moyens de déplacement en translation longitudinale de la tige adaptés pour ajuster la position de ladite tige en fonction de la pression de gaz délivré à l'intérieur du tube porte-injecteur, entre **les deux positions extrêmes de déplacement suivantes :**
   . une position de régime de ralenti pour une pression minimale du gaz d'alimentation obtenue à l'intérieur du tube porte-injecteur dans laquelle la pointe de l'aiguille pénètre à l'intérieur de l'injecteur et détermine avec ce dernier une couronne de section adaptée pour que le flux de gaz délivré et le flux d'air aspiré présentent les caractéristiques d'équilibre proportionnel nécessaire à l'obtention d'un régime de ralenti de bonne combustion,
   . une position de régime nominal pour une pression maximale du gaz d'alimentation obtenue à l'intérieur du tube porte-injecteur, dans laquelle l'aiguille détermine avec l'injecteur une section de sortie adaptée pour que le flux de gaz délivré et le flux d'air aspiré présentent les caractéristiques d'équilibre proportionnel nécessaire à l'obtention d'un régime nominal de bonne combustion.

La présente invention a donc consisté à réaliser un dispositif d'injection conçu pour obtenir simultanément une variation de la pression du gaz délivré vers l'injecteur et une variation de la position d'une aiguille remplissant une double fonction. Cette aiguille fait, en premier lieu, office de pointeau effilé permettant de moduler la section de sortie du gaz. De plus, elle sert d'organe de guidage du flux de gaz. En effet, son positionnement permet, au régime ralenti et dans la plage de pressions inférieures où elle pénètre à l'intérieur de l'injecteur, non seulement de réduire le flux de gaz, mais également de le guider de façon à obtenir un écoulement laminaire, c'est-à-dire sans turbulences faisant frein à l'intérieur de la buse, afin de conserver la vitesse du flux de gaz et permettre une aspiration induite du flux d'air nécessaire à une bonne combustion.

Il est à noter, en outre, que le recul progressif de l'aiguille conduit à une diminution progressive de ce guidage "mécanique" du flux de gaz. Toutefois, l'augmentation correspondante de la pression de gaz assure, par elle-même, un écoulement laminaire croissant nécessitant de moins en moins le recours au guidage "mécanique pour éviter les turbulences et donc la perturbation et la dégradation de l'aspiration de l'air nécessaire.

De plus, au-delà d'une pression de valeur donnée, la pression de gaz est suffisante pour que le flux de gaz s'écoule à travers la buse de façon laminaire sans le secours de l'action de guidage de ce flux par l'aiguille.

A titre d'exemple, la plage de pressions inférieures visée ci-dessus s'étend entre la pression de régime de ralenti et sensiblement les 2/5 et le 1/3 de la pression de régime nominal. Toutefois, ces valeurs sont fonctions de la plage de pression déterminée par les moyens de régulation, et, plus cette plage de pressions est basse et plus la plage de pressions dites inférieures sur laquelle l'aiguille doit apporter son concours pour assurer un guidage "mécanique" du flux de gaz sera importante.

Dans la pratique, il s'est avéré qu'une telle conception de dispositif d'injection permet de moduler le régime d'un brûleur fonctionnant en basse pression entre une puissance maximale nominale et une puissance minimale de ralenti, et ce, sans affecter la qualité de la combustion.

Cette qualité de combustion a notamment été constatée lors du fonctionnement d'appareils de chauffage à infrarouge dont on sait que la transformation en rayonnement infrarouge d'un pourcentage important de la puissance calorifique mise en jeu nécessite, à tous régimes, une optimisation des proportions du mélange air/gaz.

Il convient également de noter que, tel que développé ci-dessus, cette qualité de combustion est obtenue au moyen d'un dispositif d'injection dont le pilotage est assuré par les seules variations de la pression de gaz et de la position de l'aiguille, sans qu'il soit nécessaire de contrôler un quelconque autre paramètre tel que la quantité d'air de combustion...

Une telle conception amène une simplification notable par rapport aux dispositifs actuels tels que par exemple décrits dans les brevets US 2.572.675, EP 489.720 ou US 4.793.793 qui comportent des organes de réglage complexes nécessitant des dispositifs mécaniques supplémentaires, disposés sur la conduite d'alimentation en air, ou au dispositif décrit dans le brevet US 5.238.398 qui comporte une vanne à orifice variable disposée sur la conduite d'alimentation en gaz et asservie à un moteur pas à pas.

Selon un premier mode de réalisation préférentiel visant un dispositif comportant des moyens de régulation déportés aptes à réguler la pression de gaz délivré vers le brûleur, les moyens de déplacement en translation de la tige comprennent :
- une membrane à laquelle est solidarisée l'extrémité de la tige opposée à l'aiguille, délimitant de façon étanche deux chambres : une chambre, dite de pilotage, communiquant respectivement avec l'orifice de raccordement et le tube porte-injecteur, et une chambre dite de compensation, mise à la pression atmosphérique,
- des moyens élastiques disposés dans la chambre de compensation et agencés pour solliciter la membrane vers une position initiale, dite de repos, lorsque la pression de gaz délivré vers le brûleur est inférieure ou égale à une pression minimale, dite de ralenti, et pour se contracter de façon à autoriser une déformation de ladite membrane lorsque la pression de gaz devient supérieure à la pression de ralenti.

Selon cette version, les modulations de la pression du gaz commandées par les moyens de régulation sont amplifiées au niveau de ce dispositif d'injection, sans nécessiter de moyens externes d'actionnement. En effet, le gaz lui-même est utilisé pour auto-piloter ce dispositif d'injection par déformation d'une membrane dont l'une des faces est soumise à la pression de ce gaz et dont l'autre face est mise à l'atmosphère, et dont les déformations provoquent une variation de la section de sortie de gaz grâce au déplacement longitudinal d'une aiguille relativement à la buse d'injection, qui conduit à obtenir, à tous régimes, un parfait équilibre entre le gaz carburant injecté avec la vitesse de sortie nécessaire pour l'aspiration adéquate de l'air comburant correspondant.

En outre, le dispositif comprend alors, préférentiellement des moyens de butée de régime ralenti associés à la tige, aptes à limiter les déplacements de ladite tige lorsque la pression de gaz est inférieure ou égale à la pression de ralenti, de façon à obtenir un positionnement précis de l'aiguille correspondant au régime de ralenti.

La position de l'aiguille correspondant au régime critique de ralenti est ainsi parfaitement définie du fait de la présence de ces moyens de butée de régime ralenti qui garantissent l'obtention d'une section de sortie déterminée de façon très précise lorsque la pression de gaz devient égale ou inférieure à la pression de ralenti.

Selon un deuxième mode de réalisation préférentiel la vanne est une vanne à modulation de pression, du type à dilatation d'un soufflet, dotée d'un siège dans le prolongement du tube-porte injecteur, et comportant un clapet en regard dudit siège apte à moduler la pression du gaz délivré dans ledit tube porte-injecteur, et contre lequel vient en appui l'extrémité la tige opposée à l'aiguille. De plus, le dispositif comprend alors :
- un ressort disposé autour de la tige entre deux butées solidaires respectivement, côté injecteur, du tube porte-injecteur, et du côté opposé, de la tige, de façon à maintenir ladite tige en contact permanent avec le Clapet,
- un pré-injecteur de ralenti disposé en dérivation du siège de la vanne, adapté pour créer une perte de charge permettant d'obtenir, dans la position fermée du clapet, une pression de gaz à l'intérieur du tube porte-injecteur correspondant au régime ralenti.

Selon cette version, le dispositif d'injection est alimenté avec une pression de gaz constante et les modulations de la pression de gaz délivré l'intérieur du tube porte-injecteur sont obtenues par création d'une perte de charge en aval du clapet de la vanne qui constitue un organe de régulation directement lié aux moyens d'injection conçu, en outre, pour engendrer les déplacements de l'aiguille permettant de faire varier la section de sortie de gaz en vue d'obtenir une vitesse de sortie adéquate.

De plus, au régime ralenti correspondant à la position fermée du clapet, la diminution de la pression du gaz délivrée à l'intérieur du tube prote-injecteur et nécessaire à l'obtention de ce régime de ralenti, est réalisée par l'injecteur de ralenti qui génère une perte de charge adéquate.

En outre, selon cette version, le pré-injecteur de ralenti est préférentiellement disposé "tête-bêche" de façon que l'orifice de son extrémité conique soit celle du sens d'entrée du gaz.

Une telle disposition permet, en effet, d' éviter l'accumulation et l'agglomération de micro-impuretés provenant des conduites et du gaz commercial lui-même.

Selon une autre caractéristique de l'invention visant l'une ou l'autre version ci-dessus décrite, d'une part, le corps de vanne comprend un alésage frontal taraudé communiquant avec le conduit ménagé dans ledit corps de vanne, et d'autre part, le tube porte-injecteur présente un tronçon d'extrémité fileté adapté pour permettre la solidarisation par vissage desdits tubes porte-injecteur et corps de vanne, ledit tronçon fileté comportant une gorge annulaire logeant un joint torique et lesdits alésage et tronçon fileté étant enduits initialement d'un produit d'étanchéité et d'auto-blocage à prise lente, de façon à permettre un pré-réglage de la position relative du tube porte-injecteur et du corps de vanne sous pression de gaz.

Ces dispositions permettent de pré-régler, en usine, la position relative du corps de vanne et du tube porte-injecteur sous pression de gaz de façon à obtenir l'ajustement adéquat à l'obtention d'une parfaite combustion au régime de ralenti.

D'autres caractéristiques, buts et avantages de l'invention ressortiront de la description détaillée qui suit en référence aux dessins annexés qui en représentent à titre d'exemples non limitatifs deux modes de réalisation préférentiels. Sur ces dessins qui font partie intégrante de la présente description :
- la figure 1 est une vue schématique latérale d'un appareil de chauffage à infrarouge doté d'un dispositif d'injection conforme à l'invention,
- la figure 2 est une coupe longitudinale par un plan axial d'un premier mode de réalisation d'un dispositif d'injection conforme à l'invention,

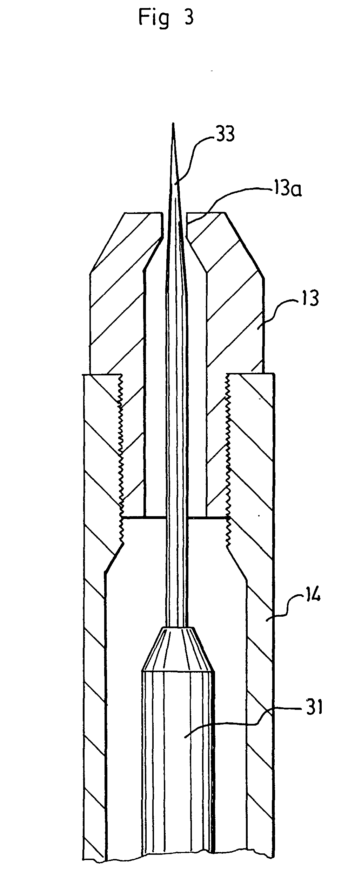

- la figure 3 est une coupe longitudinale partielle par un plan axial, à une échelle agrandie, de l'extrémité, côté sortie du gaz, de ce dispositif d'injection,
- les figures 4 et 5 sont des coupes longitudinales partielles par un plan axial, à une échelle agrandie, représentant la position de l'aiguille respectivement pour une valeur intermédiaire de la pression et au régime de ralenti,
- la figure 6 est une coupe longitudinale par un plan axial d'un deuxième mode de réalisation d'un dispositif d'injection conforme à l'invention,
- la figure 7 est une coupe longitudinale partielle par un plan axial, à une échelle agrandie, de l'extrémité, côté sortie du gaz, de ce dispositif d'injection équipé d'une première variante de forme d'aiguille,
- la figure 8 est une coupe longitudinale partielle par un plan axial, à une échelle agrandie, de l'extrémité, côté sortie du gaz, de ce dispositif d'injection équipé d'une seconde variante de forme d'aiguille.

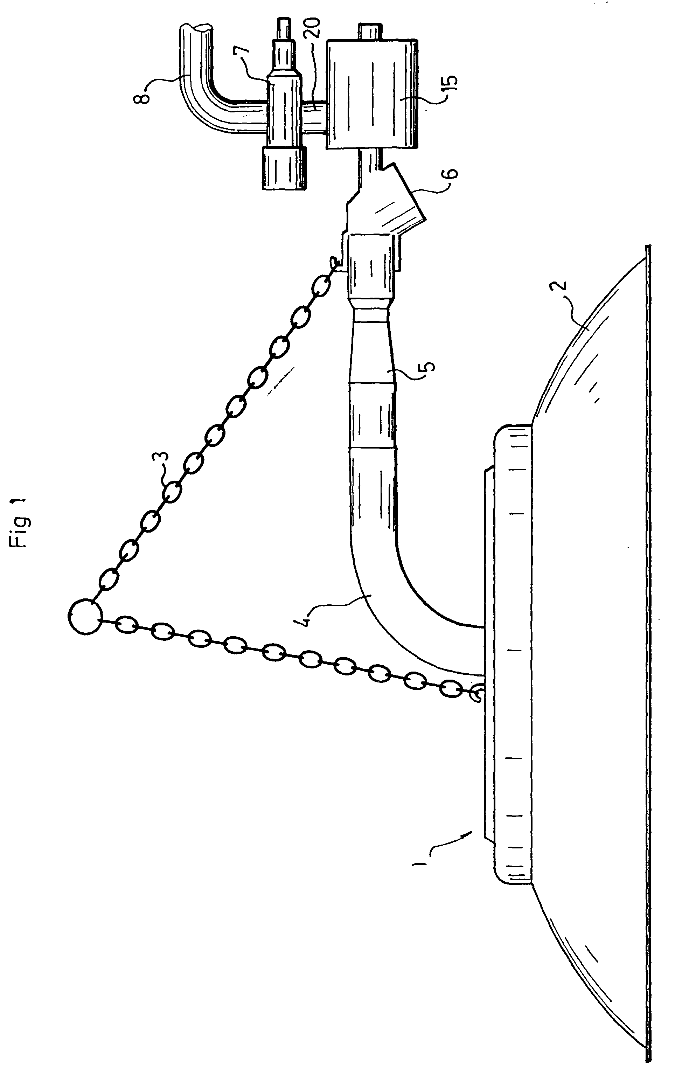

Le dispositif d'injection conforme à l'invention est représenté à la figure 1 associé à un appareil de chauffage 1 à infrarouge tel qu'utilisé dans le secteur agricole pour le chauffage de bâtiments d'élevage.

Tel que représenté à la figure 1, de tels appareils de chauffage 1 comprennent en premier lieu un réflecteur 2 se présentant sous la forme d'une coupole destinée à être suspendue au-dessus de l'emplacement choisi à l'aide par exemple d'une chaîne 3, et renfermant les organes de diffusion, de combustion et de radiation (de tels organes non représentés peuvent notamment être du type de ceux décrits dans le brevet US 5.060.629 au nom du déposant).

Chaque appareil de chauffage 1 comprend, en outre, une conduite d'alimentation en mélange air/gaz constituée d'une conduite coudée 4 dotée, de façon classique, d'un élément Venturi 5 et d'une embouchure d'entrée 6 pour l'air de combustion primaire.

Cet appareil de chauffage 1 comprend, également, de façon classique, une valve de sécurité 7 branchée sur une canalisation 8 d'alimentation en gaz dudit appareil, et dont la sortie est reliée à un dispositif d'injection de gaz disposé en amont de l'élément Venturi 5 et décrit ci-après.

Selon l'invention, de tels appareils de chauffage 1 sont destinés à fonctionner en régime nominal basse pression avec possibilité de modulation de leur régime jusqu'à un régime de ralenti minimal.

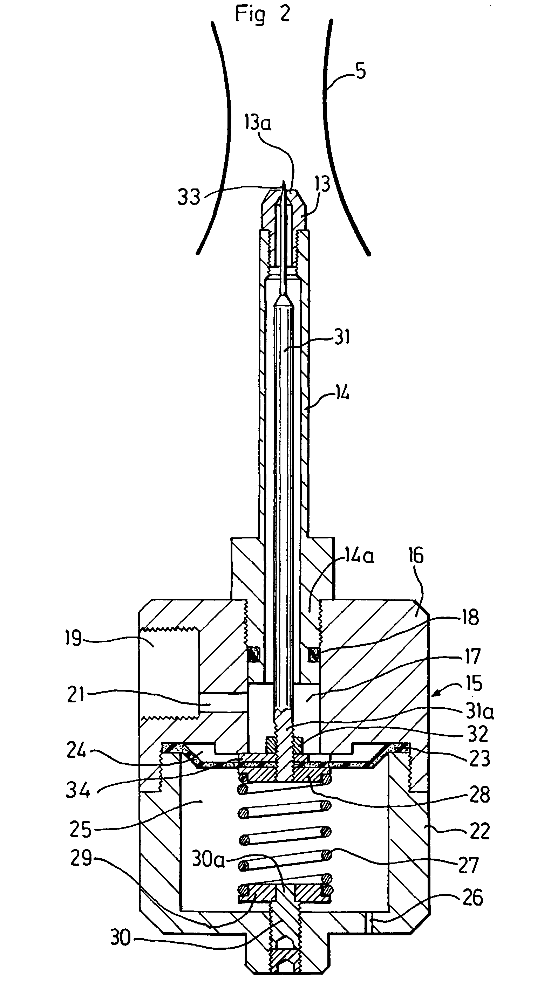

Le dispositif d'injection représenté à la figure 2 est conçu pour être associé à des moyens de régulation centralisés communs à plusieurs appareils de chauffage.

Ces moyens de régulation centralisés (non représentés) se composent, de façon classique, d'un tableau de régulation avec vanne thermostatique ou détendeur de puissance asservi à un servomoteur, le tout étant disposé en parallèle par rapport à une conduite de dérivation sur laquelle est disposé un détendeur de ralenti.

Tel que représenté à la figures 2, ce dispositif d'injection comporte un injecteur 13 doté d'une buse d'injection 13a calibrée et cylindrique, disposé dans la conduite 4 en amont de l'élément Venturi 5.

Cet injecteur 13 est vissé sur l'extrémité d'un tube porte-injecteur 14 doté à cet effet d'un tronçon d'extrémité taraudé, dont l'autre extrémité est solidarisée sur une vanne de pilotage 15.

Cette vanne de pilotage 15 comporte, en premier lieu, un corps de vanne 16 percé axialement d'un alésage longitudinal traversant 17, taraudé vers une de ses extrémités, en vue de permettre de solidariser par vissage ledit corps de vanne et le tube porte-injecteur 14 doté à cet effet d'un embout fileté 14a conjugué.

En outre, cet embout fileté 14a et le tronçon taraudé de l'alésage 17 sont enduits initialement d'un produit d'étanchéité et d'auto-blocage à prise lente apte à permettre de pré-régler la position relative du corps de vanne 16 et du tube porte-injecteur 14 sous pression de gaz. Afin d'assurer l'étanchéité lors de ce pré-réglage, l'embout fileté 14a du tube porte-injecteur 14 comporte une gorge annulaire logeant un joint torique 18.

Le corps de vanne 16 comporte, en outre, un orifice latéral 19 taraudé de raccordement avec une canalisation de gaz 20 s'étendant entre ledit corps de vanne et la valve de sécurité 7, ledit orifice latéral communiquant avec l'alésage longitudinal 17 et donc avec le tube porte-injecteur 14 par l'intermédiaire d'un alésage radial 21 débouchant dans le fond de cet orifice latéral 19.

La vanne de pilotage 15 comporte également un chapeau 22 adapté pour venir se visser frontalement sur le corps de vanne 16, dans le prolongement de ce dernier opposé au tube porte-injecteur 14, et adapté pour former avec ledit corps de vanne, au niveau de leur jonction, une gorge interne annulaire logeant la périphérie d'une membrane 23 obturant ledit chapeau et délimitant de façon étanche deux chambres : une chambre de pilotage 24 soumise à la pression du gaz et communiquant avec l'orifice latéral 19 et le tube porte-injecteur 14, et une chambre de compensation 25 occupant la quasi totalité du volume délimité par le chapeau 22, mise à la pression atmosphérique par l'intermédiaire d'un trou d'évent 26 ménagé dans ledit chapeau.

La vanne de pilotage 15 comporte, en outre, un ressort 27 disposé dans la chambre de compensation 25, entre une pièce flottante 28 solidaire de la membrane 23 et une pièce de butée 29 associée à des moyens de réglage manuel du tarage de ce ressort 27 faisant également office de moyens de butée de régime nominal aptes à limiter les déformations de la membrane 23 lorsque la pression du gaz devient supérieure à une valeur prédéterminée correspondant au régime nominal. De ce fait, les moyens de réglage du tarage du ressort 27 permettent également de régler la position de la butée de régime nominal.

Ces moyens de réglage comprennent une vis 30 logée dans un orifice taraudé ménagé dans la paroi frontale du chapeau 22, se prolongeant à l'intérieur dudit chapeau par un pointeau cylindrique 30a de diamètre inférieur, séparé du tronçon fileté de ladite vis par un épaulement.

La pièce de butée consiste, quant à elle, en une rondelle dont le diamètre de l'orifice est adapté pour que ladite rondelle soit disposée autour du pointeau 30a, en butée contre l'épaulement de la vis 30. De ce fait, le vissage ou le dévissage de la vis 30 d'une part, modifie le tarage du ressort 27, et d'autre part, permet de régler la distance entre l'extrémité du pointeau 30a et la membrane 23.

Le dispositif d'injection comporte, par ailleurs, une tige 31 logée dans le tube porte-injecteur 14, de diamètre adapté pour ménager un volume annulaire à l'intérieur de ce dernier.

Cette tige 31 présente un tronçon d'extrémité postérieur fileté 31a s'étendant de façon étanche au travers de la membrane 23, et solidarisé par vissage à la pièce flottante 28, le blocage relatif des dites tige et pièce flottante étant assuré par un contre-écrou 32.

Côté opposé, cette tige 31 est prolongée par une aiguille conique 33, par exemple sertie sur ladite tige, présentant une longueur supérieure à celle de l'injecteur 13, filetage de ce dernier compris, de façon que ladite aiguille débouche à l'extérieur de cet injecteur 13 dans les conditions de régime de ralenti sans que l'admission de gaz dans ledit injecteur ne soit gênée par la base de la tige 31.

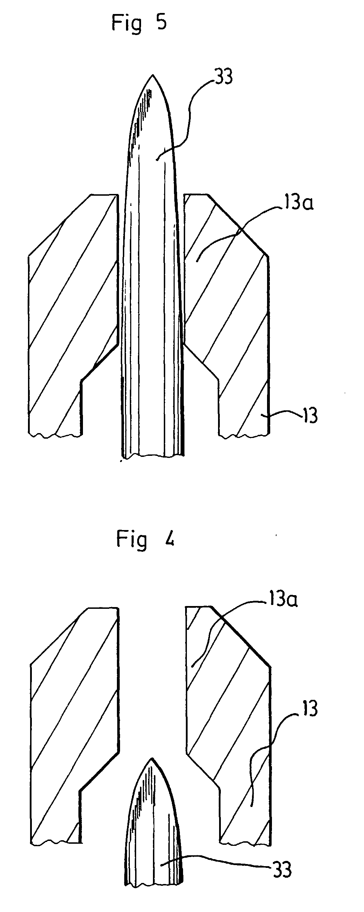

Par ailleurs, tel que représenté aux figures 4 et 5, la tige 31 et les moyens de déplacement longitudinal de cette dernière (membrane 23, ressort 27, ...) sont adaptés pour que :
. au régime ralenti, l'aiguille 33 s'étende partiellement dans le prolongement de la buse d'injection 13a de façon à guider le flux de gaz et à obtenir un écoulement laminaire permettant une aspiration induite du flux d'air nécessaire à une bonne combustion (figure 5),
. l'aiguille 33 recule progressivement lors de la montée en pression de façon à entraîner une augmentation progressive de la section de la buse d'injection 13a, la position intermédiaire représentée à la figure 4, où l'extrémité de cette aiguille 33 s'efface par rapport à la buse d'injection 13a, correspondant par exemple à une pression d'alimentation du gaz égale aux 2/5 de la pression nominale. Lors de ce recul, la diminution du guidage "mécanique" du flux de gaz est compensée par l'augmentation de la pression de gaz qui assure, par elle-même, un écoulement laminaire croissant.

De plus, la perte de vitesse de ce flux, qui correspond à l'augmentation de la couronne de passage du flux de gaz entre la buse 13a et la section conique de l'aiguille 33 est compensée par l'augmentation de la pression du gaz, et, de ce fait, la capacité d'aspiration de l'air comburant dans le Venturi 5 est assurée.

Lorsque la pression nominale est atteinte, la membrane fait reculer l'aiguille jusqu'à ce que la pointe de la partie conique de celle-ci libère la section de la buse cylindrique 13a de l'injecteur 13.

Le calibre de l'injecteur 13 est donc choisi, dans cette version, en fonction de la puissance nominale, à la pression nominale, du brûleur considéré. Il s'agit donc d'un choix d'injecteur classique, puisqu'à la pression nominale l'aiguille libère le canal de la buse cylindrique 13a.

Les caractéristiques de l'aiguille 33, c'est-à-dire sa longueur, sa course utile, son diamètre cylindrique, la conicité de son extrémité, doivent tenir compte des paramètres suivants :
a) longueur : plus longue que la longueur "hors tout" de l'injecteur 13, filetage compris, afin que l'admission du gaz dans cet injecteur ne soit pas gênée par la base de la tige 31 à laquelle est assujettie l'aiguille, quand celle-ci, en position de pression minimum débouche hors de l'injecteur d'une valeur déterminée par la longueur du cylindre creux de la buse 13a et la course utile de la membrane 23,
b) diamètre cylindrique : adapté pour que la couronne laissée libre entre la buse 13a de l'injecteur 13 et le corps cylindrique de l'aiguille 33 corresponde, au maximum, dans les conditions de pression minimale, au flux de gaz à admettre dans la buse de l'injecteur,
c) profil conique : dans la pratique, ce profil peut être à angle constant, toutefois, un profil Ogival permet d'obtenir, si nécessaire, une meilleure proportionalité de la variation de puissance entre les pressions maximale et minimale.

La hauteur de ce profil dépend de la course utile de l'aiguille 33, et donc de la course de débattement de la membrane 23 sous l'action de la pression et de la réaction du ressort 27. La raideur de ce ressort est choisie en fonction de la course retenue pour la membrane et obtenue pour l'aiguille.

Cette course retenue dépend, non seulement de la longueur du cylindre creux de la buse 13a de l'injecteur 13, mais aussi d'une particularité annoncée précédemment : il est en effet primordial, lorsqu'on se trouve en fonctionnement dans la moitié inférieure du régime nominal, que l'extrémité, côté pointe de l'aiguille, ait déjà débouché à l'extérieur de la buse de l'injecteur.

En effet, l'âme conique de l'aiguille 33, en occupant alors, la totalité du cylindre de la buse 13a de l'injecteur 13, dessine, en couronne, sur toute la longueur de cette buse, un volume creux :
. de forme cylindrique à sa périphérie extérieure,
. conique et inverse de l'aiguille 33 à sa périphérie intérieure.

La géométrie des parois périphériques de ce volume creux provoque, alors, un effet Venturi qui empêche la création de turbulences parasites, (tourbillons de KARMAN), et la perte de vitesse qui en découlerait pour le flux de gaz, si l'aiguille s'arrêtait à mi-cylindre de la buse d'un injecteur calibré pour le régime nominal à la pression nominale et donc non calibré pour un régime inférieur. La présence de l'aiguille crée donc les conditions d'un écoulement laminaire.

La course de l'aiguille 33 doit aussi tenir compte d'une tolérance de réglage par la vis 30, agissant sur le ressort 27 et donc sur la position de cette aiguille par rapport à l'injecteur.

En dernier lieu, le dispositif d'injection comprend un organe de butée 34 de régime ralenti agencé pour que la position de l'aiguille 33 relativement à la buse d'injection 13a soit rigoureusement toujours la même. Cet organe de butée consiste en une coupelle 34 interposée entre la membrane 23 et le contre-écrou 32, autour de la tige 31, ladite coupelle présentant un diamètre adapté pour venir en butée sur le pourtour de l'alésage 17 du corps de vanne 16, et comportant des fentes radiales permettant le passage du gaz.

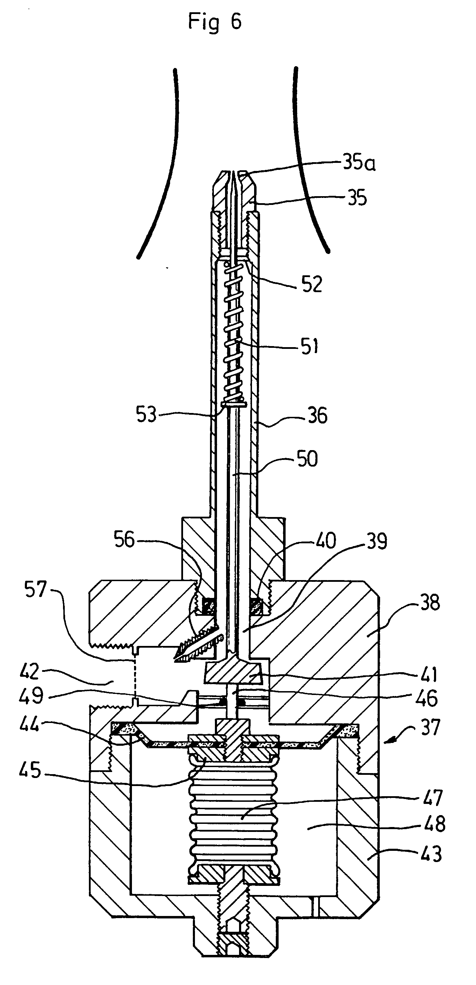

Le deuxième dispositif d'injection conforme à l'invention, représenté à la figure 6 comporte, quant à lui, un organe de régulation propre consistant en une vanne thermostatique de modulation de la pression par un effet de perte de charge.

Comme précédemment, ce dispositif d'injection comporte un injecteur 35 doté d'une buse 9 d'injection 35a calibrée et cylindrique, et vissé sur l'extrémité d'un tube porte-injecteur 36 dont l'autre extrémité est solidarisée sur la vanne thermostatique 37.

Cette vanne thermostatique 37 comporte, en premier lieu, un corps de vanne 38 percé axialement d'un alésage longitudinal traversant 39, taraudé vers une de ses extrémités, en vue de permettre de solidariser par vissage ledit corps de vanne et le tube porte-injecteur 36 avec interposition d'un joint torique 40, et formant un siège pour un clapet 41 vers son autre extrémité.

Le corps de vanne 38 comporte, en outre, un orifice latéral 42 taraudé de raccordement avec une canalisation de gaz s'étendant entre ledit corps de vanne et la valve de sécurité, ledit orifice latéral communiquant avec le tube porte-injecteur 36 et étant doté d'un tamis 57.

La vanne thermostatique 37 comporte également un chapeau 43 adapté pour venir se visser frontalement sur le corps de vanne 38, dans le prolongement de ce dernier opposé au tube porte-injecteur 36, et adapté pour former avec ledit corps de vanne, au niveau de leur jonction, une gorge interne annulaire logeant la périphérie d'une membrane 44 de part et d'autre de laquelle sont solidarisés, au moyen d'une pièce de jonction 45, d'une part, une tige axiale 46 solidaire du clapet 41, et d'autre part, un soufflet classique 47 s'étendant dans une chambre 48 dotée d'un évent.

Cette membrane d'étanchéité 44 est, en outre, doublée d'un joint torique 49 disposé autour de la tige 46 du clapet 41.

Cette double étanchéité présente l'intérêt de pallier à toute éventuelle défaillance de l'un ou l'autre de ces deux éléments.

La position relative la plus logique de ces deux éléments d'étanchéité, l'un par rapport à l'autre, est celle représentée sur la figure 6.

Cette position relative peut toutefois être inversée dans le cas d'une faible pression nominale d'utilisation du gaz.

En effet, dans ce cas, l'effort exercé directement sur la membrane 44, côté alimentation en gaz, n'est pas un obstacle significatif contre l'action du soufflet 47 sur le clapet 41.

Le dispositif d'injection comporte, par ailleurs, une tige 50 logée dans le tube porte-injecteur 36, de diamètre adapté pour ménager un volume annulaire à l'intérieur de ce dernier.

Cette tige 50 est adaptée pour venir en appui constant contre le clapet 41 par son extrémité arrière. A cet effet, un ressort 51 est enfilé autour de cette tige 31, à l'intérieur du tube porte-injecteur 36, entre deux butées consistant, côté injecteur 35, en un épaulement 52 ménagé à l'intérieur dudit tube porte-injecteur, et côté opposé, en une bague 53 solidaire de ladite tige 50.

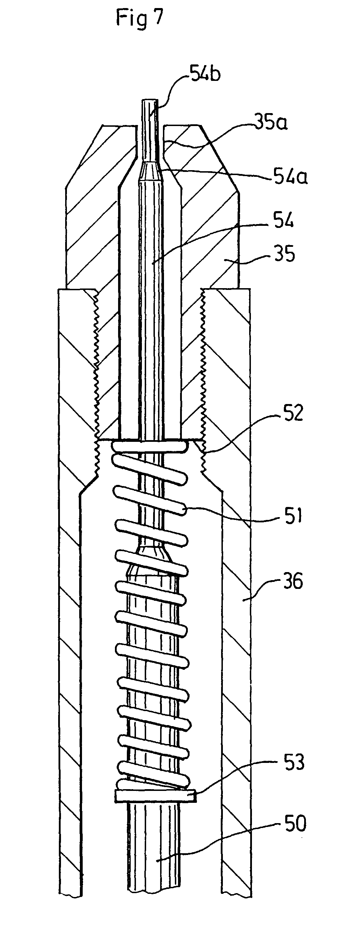

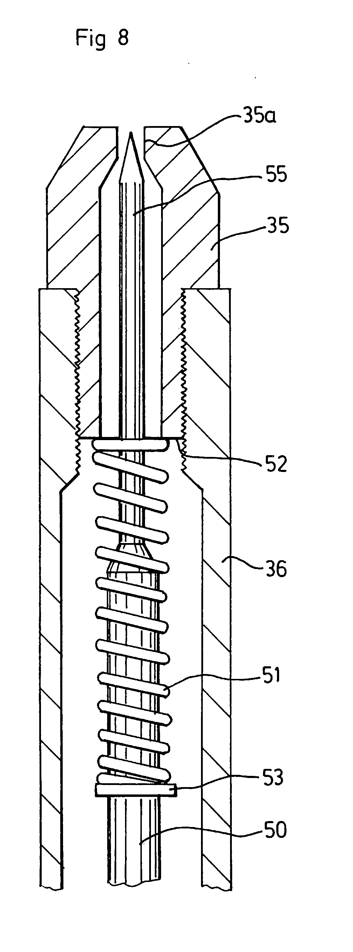

Tel que représenté aux figures 7, 8 cette tige 50 comporte, en outre, au niveau de son extrémité, une aiguille pouvant présenter deux profils différents, pour des raisons de faisabilité industrielle, en fonction de la puissance du brûleur et de la section de l'injecteur 35.

En effet, si la puissance du brûleur et la section de l'injecteur nécessaire sont assez importants pour accepter une aiguille traversante de diamètre suffisant pour sa réalisation industrielle, sans risque de fragilisation, le profil le plus adapté est celui représenté à la figure 7.

Cette aiguille 54 comporte alors une partie conique 54a prolongée à l'intérieur de la buse de l'injecteur 35 par une partie cylindrique 54b laissant une couronne correspondant au passage nominal du flux de gaz. La partie conique 54a assure une fonction de pointeau et la partie cylindrique 54b une fonction de guidage du flux avec effet laminaire, sans turbulences parasites, tourbillons de KARMAN, et sans freinage des "couches limites de PRANDTL".

Par contre, si la puissance du brûleur et donc la section de l'injecteur 35 sont trop réduits pour accepter une aiguille traversante de diamètre suffisant sans risque de fragilisation et sans difficulté pratique de réalisation industrielle, le profil le plus adapté est celui représenté à la figure 8.

Le profil de l'aiguille 55 est alors conique et la faible section de la buse de l'injecteur 35 permet même de limiter la pénétration de ce profil conique à 75/80 % de la longueur de celle-ci. Dans ce cas d'injecteur 35 de petite taille pour appareils de faible puissance, le profil défini ci-dessus est suffisant pour guider le flux de façon laminaire, sans tourbillons de KARMAN, et sans freinage par les couches limites de la paroi interne de la buse de cet injecteur et de la surface du profil conique de l'aiguille 55.

Les caractéristiques du profil de ces aiguilles 54, 55 sont déterminées :
- en corrélation, tel qu'indiqué ci-dessus, avec la section nécessaire de la buse cylindrique 35a de l'injecteur 35,
- en fonction de la course imposée par la vanne thermostatique 37.

En effet, dans le cas d'une vanne thermostatique 37, la course imposée par un piston thermostatique à soufflet 47 contenant une substance de dilatation, est de faible ampleur et la course utile du clapet 41 est en général inférieure à 1 millimètre, pour un différentiel de température de 1 degré centigrade.

Dans le cas où, selon l'invention, le mouvement de l'aiguille 54, 55 est associé à une pression variable induite par la modification de la perte de charge d'une vanne réglable à clapet, cette faible course conduit à une configuration de l'aiguille et à un positionnement par rapport à la buse de l'injecteur 35 différents de ceux retenus pour la première version à grande course par membrane.

En effet, pour obtenir le dosage de l'air aspiré par rapport au gaz injecté, en vue d'une bonne carburation, il est impératif :
a) que les couronnes respectives de passage du gaz, entre buse 35a et aiguille 54, 55, en régime maximum et en régime minium, soient déterminées en établissant leur valeur respective d'équivalence à deux injecteurs classiques distincts donnant la bonne combustion recherchée, l'un au régime maximum, l'autre au régime minimum,
b) que l'aiguille 54, 55 assure non seulement sa fonction de pointeau, mais aussi, et essentiellement, la fonction de guidage du flux dans la buse de l'injecteur 35, à tous les régimes intermédiaires, afin d'obtenir, à chaque instant, l'écoulement laminaire non freiné, comme ci-dessus mentionné,
c) que la variation de pression du gaz sortant de l'injecteur 35 corresponde, de façon concomitante, aux différents stades de la variation de la puissance de l'appareil, et que la vitesse d'injection qui en résulte assure ainsi l'aspiration proportionnelle de l'air comburant, y compris au régime de ralenti grâce au rôle du pré-injecteur décrit ci-après, lorsque le clapet 41 est fermé.

Ainsi, les caractéristiques de l'aiguille 54, 55 s'établissent en fonction des paramètres suivants :
a) longueur : plus longue que la longueur "hors tout" de l'injecteur 35, filetage compris, afin que l'admission de gaz, dans le corps de l'injecteur, ne soit pas gênée par le corps de la tige 50 côté aiguille,
b) profil de la partie conique de l'aiguille 54, 55 calculé de telle sorte que la différence entre la section "Si" de la buse 35a de l'injecteur 35 et la section "Sa" de l'aiguille, au niveau de son entrée dans la buse de l'injecteur, donne un flux de gaz correspondant au régime de ralenti du brûleur aux conditions de pression requises.

Cette donnée se traduit par l'équation 1 suivante :
Flux (Si - Sa) = flux équivalent à celui d'un injecteur classique de ralenti correspondant,
c) profil conique de l'aiguille 54, 55 calculé de telle sorte que pour une course donnée du clapet 41, la différence entre la section "Si" de la buse de l'injecteur 35 et la section "Sb" de la partie conique de l'aiguille à l'entrée de ladite buse, en régime maximal, donne un flux de gaz, à la pression nominale, correspondant au régime nominal du brûleur.

Cette donnée se traduit par l'équation 2 suivante :
Flux (Si - Sb) = flux équivalent à celui d'un injecteur classique correspondant au régime nominal du brûleur à la pression nominale.

La résolution du système constitué par ces deux équations permet de déterminer :
- la section Si de la buse 35a de l'injecteur 35, et donc son calibre ;
- le profil de la partie conique de l'aiguille 54, 55 ;
- la hauteur du cylindre de la buse 35a de l'injecteur 35 qui correspond à l'aiguille.

Enfin, ce dispositif d'injection comporte un pré-injecteur de ralenti 56 disposé en dérivation du conduit principal d'alimentation en gaz constitué de l'alésage radial et du siège du clapet 41.

Ce pré-injecteur de ralenti 56 est disposé "tête-bêche", c'est-à-dire de façon que l'orifice d'entrée du gaz soit celui de son extrémité conique, contrairement à la disposition classique.

En effet, dans la disposition classique avec entrée du gaz par l'extrémité opposée au profil conique, cette conicité, qui se situe aussi bien à l'intérieur qu'à l'extérieur, par nécessité technologique de perforation de l'orifice calibré, forme un goulot d'étranglement où les micro-impuretés peuvent s'agglomérer et se tasser, et conduit à l'obturation des injecteurs de faible calibre.

Dans la disposition adoptée, si une micro-impureté réussit à franchir le tamis 57, dont la définition de maille est inférieure à celle du calibre du pré-injecteur de ralenti 56, elle ne peut en aucune façon s'accumuler dans ce pré-injecteur après s'être introduite par la pointe de sa partie conique.

## Revendications

1. Dispositif d'injection pour brûleur atmosphérique à gaz d'appareil de chauffage, notamment du type infrarouge, comprenant une conduite d'amenée d'air (4) dotée d'une embouchure d'entrée d'air (6) et d'un élément Venturi (5), et des moyens d'injection disposés dans la conduite d'amenée d'air (4) de chaque brûleur, en amont de l'élément Venturi (5), lesdits moyens d'injection comprenant:
- un tube porte-injecteur (14 ; 36) portant, vers une de ses extrémités, un injecteur (13 ; 35) doté d'une buse d'injection (13a ; 35a) calibrée, et solidarisé, vers son extrémité opposé, sur un corps (16 ; 38) de vanne (15 ; 37) comportant un orifice (19 ; 42) de raccordement sur une canalisation (20) d'alimentation en gaz et un conduit de liaison (17, 21 ; 39) entre ledit orifice et le tube porte-injecteur,
- une tige (31 ; 50) logée dans le tube porte-injecteur (14 ; 36) et de diamètre inférieur au diamètre intérieur de ce dernier, ladite tige présentant, vers son extrémité côté injecteur (13 ; 35), une aiguille (33, 54, 55) dotée d'une pointe conçue pour pouvoir pénétrer à l'intérieur dudit injecteur,
- des moyens de régulation (37) aptes à réguler la pression du gaz délivré à l'intérieur du tube porte-injecteur (14 ; 36) en fonction de données de régulation de température,
- des moyens (23, 27 ; 41, 47, 51) de déplacement en translation longitudinale de la tige (31 ; 50) adaptés pour ajuster la position de--ladite tige en fonction de la pression de gaz délivré à l'intérieur du tube porte-injecteur (14 ; 36), entre **les deux positions extrêmes** **de déplacement suivantes :**
. une position de régime de ralenti pour une pression minimale du gaz d'alimentation obtenue à l'intérieur du tube porte-injecteur (14 ; 36) dans laquelle la pointe de l'aiguille (33 ; 54 ; 55) pénètre à l'intérieur de l'injecteur ( 13 ; 3 5 ) et détermine avec ce dernier une couronne de section adaptée pour que le flux de gaz délivré et le flux d'air aspiré présentent les caractéristiques d'équilibre proportionnel nécessaire à l'obtention d'un régime de ralenti de bonne combustion,
. une position de régime nominal pour une pression maximale du gaz d'alimentation obtenue à l'intérieur du tube porte-injecteur (14 ; 36), dans laquelle l'aiguille (33 ; 54 ; 55) détermine avec l'injecteur (13 ; 35) une section de sortie adaptée pour que le flux de gaz délivré et le flux d'air aspiré présentent les caractéristiques d'équilibre proportionnel nécessaire à l'obtention d'un régime nominal de bonne combustion.

2. Dispositif selon la Revendication 1 comportant des moyens de régulation déportés aptes à réguler la pression du gaz délivré vers le brûleur, caractérisé en ce que les moyens de déplacement en translation de la tige comprennent :
- une membrane (23) à laquelle est solidarisée l'extrémité de la tige (31) opposée à l'aiguille (33), délimitant de façon étanche deux chambres : une chambre (24), dite de pilotage, communiquant respectivement avec l'orifice de raccordement (19) et le tube porte-injecteur (14), et une chambre (25) dite de compensation mise à la pression atmosphérique,
- des moyens élastiques (27) disposés dans la chambre de compensation (25) et agencés pour solliciter la membrane (23) vers une position initiale, dite de repos, lorsque la pression de gaz délivré vers le brûleur est inférieure ou égale à une pression minimale, dite de ralenti, et pour se contracter de façon à autoriser une déformation de ladite membrane lorsque la pression de gaz devient supérieure à la pression de ralenti.

3. Dispositif selon la Revendication 2 caractérisé en ce qu'il comprend des moyens de butée (34) de régime ralenti associés à la tige (31), aptes à limiter les déplacements de ladite tige lorsque la pression de gaz est inférieure ou égale à la pression de ralenti, de façon à obtenir un positionnement précis de l'aiguille (33) correspondant au régime de ralenti.

4. Dispositif selon l'une des Revendications 2 ou 3 caractérisé en ce que les moyens élastiques (27) s'étendent entre la membrane (23) et une butée mobile (29) associée à une vis de réglage (30), permettant d'ajuster le mouvement de translation et par conséquent la position de l'aiguille (33) par rapport à l'injecteur (13).

5. Dispositif selon la Revendication 1 caractérisé en ce que la vanne (37) est une vanne à modulation de pression, du type à dilatation d'un soufflet (47), dotée d'un siège dans le prolongement du tube porte-injecteur (36), et comportant un clapet (41) en regard dudit siège apte à moduler la pression du gaz délivré dans ledit tube porte-injecteur, et contre lequel vient en appui l'extrémité la tige (50) opposée à l'aiguille (54 ; 55), ledit dispositif comprenant :
- un ressort (51) disposé autour de la tige (50) entre deux butées (52, 53) solidaires respectivement, côté injecteur (35), du tube porte-injecteur (36), et du côté opposé, de la tige (50), de façon à maintenir ladite tige en contact permanent avec le clapet (41),
- un pré-injecteur de ralenti disposé (56) en dérivation du siège de la vanne (37), adapté pour créer une perte de charge permettant d'obtenir, dans la position fermée du clapet (41), une pression de gaz à l'intérieur du tube porte-injecteur (36) correspondant au régime ralenti.

6. Dispositif selon la Revendication 5 caractérisé en ce que le pré-injecteur de ralenti (56) est disposé "tête-bêche" de façon que l'orifice de son extrémité conique soit celle du sens d'entrée du gaz.

7. Dispositif selon l'une des Revendications 5 ou 6 caractérisé en ce que la vanne (37) comprend des moyens d'étanchéité constitués d'une membrane (44).

8. Dispositif selon la Revendication 7 caractérisé en ce que la vanne (37) comprend des seconds moyens d'étanchéité constitués d'un joint torique (49).

9. Dispositif selon l'une des Revendications précédentes caractérisé en ce que d'une part, le corps de vanne (16 ; 38) comprend un alésage frontal taraudé communiquant avec le conduit (17 ; 39) ménagé dans ledit corps de vanne, et d'autre part, le tube porte-injecteur (14 ; 36) présente un tronçon d'extrémité fileté adapté pour permettre la solidarisation par vissage desdits tubes porte-injecteur et corps de vanne, ledit tronçon fileté comportant une gorge annulaire logeant un joint torique (18 ; 40) et lesdits alésage et tronçon fileté étant enduits initialement d'un produit d'étanchéité et d'auto-blocage à prise lente de façon à permettre un pré-réglage de la position relative du tube porte-injecteur (14 ; 36) et du corps de vanne (16 ; 38) sous pression du gaz.

## Patentansprüche

1. Einspritzvorrichtung für atmosphärische Gasbrenner von Heizgeräten, insbesondere des Infrarottyps, die eine Rohrleitung für die Luftzufuhr (4), ausgestattet mit einer Lufteinlaßöffnung (6) und einem Venturi-Element (5), sowie Einspritzmittel, die bei jedem Brenner in der Rohrleitung für die Luftzufuhr (4) oberhalb des Venturi-Elements (5) angeordnet sind, umfaßt, wobei die Einspritzmittel umfassen:
- eine Injektorträgerhülse (14; 36), die am einen Ende einen Injektor (13; 35) trägt, der mit einer geeichten Einspritzdüse (13a; 35a) versehen ist, und am gegenüberliegenden Ende mit dem Körper (16; 38) eines Ventils (15; 37) verbunden ist, das eine Anschlußöffnung (19; 42) für das Gasversorgungsnetz (20) und ein Verbindungsrohr (17, 21; 39) zwischen dieser Öffnung und der Injektorträgerhülse aufweist,
- einen Stift (31; 50), der in der Injektorträgerhülse (14; 36) angeordnet ist, wobei der Stift vom unten gelegenen Durchmesser zum Innendurchmesser des Injektors hin zu seinem injektorseitigen Ende (13; 35) hin eine Nadel (33, 54, 55) darstellt, deren Spitze so ausgebildet ist, daß sie in das Innere des Injektors eindringen kann,
- Regulierungsmittel (37), die geeignet sind, den ins Innere der Injektorträgerhülse (14; 36) geleiteten Gasdruck in Abhängigkeit von den Daten der Temperaturregelung zu regulieren,
- Mittel für die Verschiebung (23, 27; 41, 47, 51) des Stift (31; 50) in Längsrichtung, die so ausgebildet sind, daß die Position des Stiftes in Abhängigkeit vom Druck des ins Innere der Injektorträgerhülse (14; 36) geleiteten Gases zwischen **den folgenden beiden extremen Verschiebungspositionen** eingestellt werden kann:
- einer Ruhestromposition für einen Minimaldruck des Versorgungsgases, der im Inneren der Injektorträgerhülse (14; 36) erhalten wird, wobei die Nadelspitze (33; 54; 55) ins Innere des Injektors (13; 35) eindringt und mit diesem einen Schnittkranz bildet, der so ausgebildet ist, daß die Strömung des zugeführten Gases und die Strömung der angesaugten Luft die Eigenschaften des Gleichgewichtsverhältnisses aufweisen, die zur Einstellung eines Ruhestroms mit guter Verbrennung notwendig sind,
- einer Normalbetriebsposition für einen Maximaldruck des Versorgungsgases, der im Innern der Injektorträgerhülse (14; 36) erhalten wird, wobei die Nadel (33; 54; 55) mit dem Injektor (13; 35) einen Austrittsquerschnitt festlegt, der so angepaßt ist, daß die Strömung des zugeführten Gases und die Strömung der angesaugten Luft die Eigenschaften des Gleichgewichtsverhältnisses aufweisen, die zur Einstellung eines Normalbetriebes mit guter Verbrennung notwendig sind.

2. Vorrichtung gemäß Anspruch 1, welche verschobene Mittel zur Regulierung aufweist, die geeignet sind, den Druck des zum Brenner geführten Gases zu regulieren, dadurch gekennzeichnet, daß die Mittel für die Verschiebung des Stiftes in Längsrichtung umfassen:
- eine Membran (23), an der das der Nadel (33) gegenüberliegende Ende des Stiftes (31) befestigt ist und die zwei Kammern dicht abgrenzt: eine Kammer (24), genannt Steuerkammer, die mit jeweils der Anschlußbohrung (19) und der Injektorträgerhülse (14) in Verbindung steht, und eine Kammer (25), genannt Ausgleichskammer, die an den Luftdruck angeschlossen ist,
- elastische Mittel (27), die in der Ausgleichskammer (25) angeordnet und dafür ausgebildet sind, die Membran (23) in einer Ausgangsposition, Ruheposition genannt, zu halten, jedesmal wenn der Druck des dem Brenner zugeführten Gases kleiner oder gleich einem Minimaldruck, Ruhedruck genannt, ist, und sich zusammenzuziehen und so eine Verformung der Membran erlauben, jedesmal wenn der Gasdruck den Ruhedruck überschreitet.

3. Vorrichtung gemäß Anspruch 2, dadurch gekennzeichnet, daß sie Mittel zur Begrenzung (34) des Ruhestroms beinhaltet, die mit dem Stift (31) verbunden und die geeignet sind, die Verschiebung des Stifts zu begrenzen, jedesmal wenn der Gasdruck kleiner oder gleich dem Ruhedruck ist, um in der Weise eine präzise Positionierung der Nadel (33) zu erhalten, die mit der Ruheposition übereinstimmt.

4. Vorrichtung gemäß Anspruch 2 oder 3, dadurch gekennzeichnet, daß die elastischen Mittel (27) sich zwischen der Membran (23) und einer beweglichen, mit einer Stellschraube (30) verbundenen Begrenzung (29) erstrecken, die es gestatten, die Translationsbewegung und dadurch auch die Position der Nadel (33) im Verhältnis zum Injektor (13) einzustellen.

5. Vorrichtung gemäß Anspruch 1, dadurch gekennzeichnet, daß das Ventil (37) ein Druckmodulationsventil ist, vom Balgfederdehnungs-Typ (47), versehen mit einem Sitz in der Verlängerung der Injektorträgerhülse (36) und ein dem Sitz gegenüberliegendes Klappenventil (41) aufweisend, das geeignet ist, den Druck des zugeführten Gases in der Injektorträgerhülse zu modulieren, und gegen die das der Nadel (54; 55) gegenüberliegende Ende des Stiftes (50) als Stütze wirkt, wobei diese Vorrichtung umfaßt:
- eine Feder (51), die um den Stift (50) herum zwischen zwei Begrenzungen (52, 53) angeordnet ist, die auf der Seite des Injektors (35) mit der Injektorträgerhülse (36) bzw. auf der gegenüber liegenden Seite mit dem Stift (50) verbunden sind, so daß der Stift in stetem Kontakt mit dem Klappenventil (41) gehalten wird,
- einen Ruhedruck-Vor-Injektor (56), angebracht in Abzweigung vom Ventilsitz (37) und geeignet, einen Druckverlust zu erzeugen, der es bei geschlossener Position des Klappenventils (41) gestattet, im Inneren der Injektorträgerhülse (36) einen Gasdruck zu erhalten, der dem des Ruhestroms entspricht.

6. Vorrichtung gemäß Anspruch 5, dadurch gekennzeichnet, daß der Ruhedruck-Vor-Injektor (56) so "Kopf an Fuß" angeordnet ist, daß die Öffnung seines konischen Endes dieselbe Richtung wie die des Gaszugangs besitzt.

7. Vorrichtung gemäß Anspruch 5 oder 6, dadurch gekennzeichnet, daß das Ventil (37) Mittel für die Dichtheit einschließt, die aus einer Membran (44) bestehen.

8. Vorrichtung gemäß Anspruch 7, dadurch gekennzeichnet, daß das Ventil (37) zweite Mittel für die Dichtheit umfaßt, die aus einer O-Ring-Dichtung (49) bestehen.

9. Vorrichtung gemäß einem der vorangegangenen Ansprüche, dadurch gekennzeichnet, daß einerseits der Ventilkörper (16; 38) eine stirnseitige Bohrung mit Innengewinde umfaßt, die mit dem Leitungsrohr (17; 39), das im Ventilkörper angebracht ist, in Verbindung steht, und daß andererseits die Injektorträgerhülse (14, 36) am Ende einen Abschnitt mit Außengewinde aufweist, der geeignet ist, durch Verschraubung der Injektorträgerhülse und des Ventilkörpers eine Verbindung zu ergeben, wobei dieser gewindetragende Abschnitt eine Ringnut aufweist, die eine O-Ring-Dichtung (18; 40) beherbergt, die Bohrung sowie der gewindetragende Abschnitt anfänglich mit einem Produkt für die Dichtheit und für die langsame Eigenblockage beschichtet sind, um auf diese Weise eine Voreinstellung der relativen Position von Injektorträgerhülse (14; 36) und Ventilkörper (16; 38) unter Gasdruck zu erlauben.

## Claims

1. Atmospheric gas burner injection device for a heating apparatus, more especially of the infrared type, comprising an air supply pipe (4), which is provided with an air intake mouthpiece (6) and a Venturi element (5), and comprising injecting means disposed in the air supply pipe (4) of each burner, upstream of the Venturi element (5), said injecting means comprising:
- an injector-carrying tube (14; 36) carrying, towards one of its ends, an injector (13; 35), which is provided with a calibrated injection nozzle (13a; 35a) and made integral, towards its opposite end, on a body (16; 38) of a valve (15; 37), which body comprises an opening (19; 42) connecting with a gas supply pipeline (20) and a connecting duct (17, 21; 39) between said opening and the injector-carrying tube;
- a rod (31; 50), which is accommodated in the injector-carrying tube (14; 36) and has a diameter smaller than the internal diameter of this tube, said rod having, towards its injector-side end (13; 35), a needle (33, 54, 55), which is provided with a point designed to be able to penetrate into the interior of said injector;
- adjustment means (37) capable of regulating the pressure of the gas delivered to the interior of the injector-carrying tube (14; 36), in dependence on temperature regulation data;
- means (23, 27; 41, 47, 51) for displacing the rod (31; 50) in a longitudinal manner, which means are suitable for adjusting the position of said rod in dependence on the gas pressure delivered to the interior of the injector-carrying tube (14; 36), between the following two extreme displacement positions:
a slow-running setting position for obtaining minimum pressure of the gas supply inside the injector-carrying tube (14; 36), in which the point of the needle (33; 54; 55) penetrates to the inside of the injector (13; 35) and determines therewith an enlarged cross-section suitable for the flow of delivered gas and the flow of aspirated air to have the characteristics of proportional equilibrium necessary to obtain a slow-running setting for good combustion;
a nominal setting position for obtaining maximum pressure of the gas supply inside the injector-carrying tube (14; 36), in which the needle (33; 54; 55) determines, with the injector (13; 35), a final cross-section suitable for the flow of delivered gas and the flow of aspirated air to have the characteristics of proportional equilibrium necessary to obtain a nominal setting for good combustion.

2. Device according to claim 1, comprising offset adjustment means capable of regulating the pressure of the gas delivered to the burner, characterised in that the means for displacing the rod comprise:
- a diaphragm (23), with which the end of the rod (31) opposite the needle (33) communicates, said diaphragm defining in a tight manner two chambers: one chamber (24), called the pilot chamber, communicating respectively with the connection opening (19) and the injector-carrying tube (14), and one chamber (25), called the compensation chamber, set at atmospheric pressure;
- resilient means (27), disposed in the compensation chamber (25) and adapted to draw the diaphragm (23) towards an initial position, called the inactive position, when the gas pressure delivered to the burner is less than or equal to a minimum pressure, called the slow-running pressure, and to contract so as to permit said diaphragm to be deformed when the gas pressure becomes greater than the slow-running pressure.

3. Device according to claim 2, characterised in that it comprises stop means (34) for the slow-running setting, which stop means are associated with the rod (31) and are capable of limiting the displacements of said rod when the gas pressure is less than or equal to the slow-running pressure, so as to obtain a precise positioning of the needle (33) corresponding to the slow-running setting.

4. Device according to one of claims 2 or 3, characterised in that the resilient means (27) extend between the diaphragm (23) and a displaceable abutment (29) associated with an adjustment screw (30), which permits the displacement movement to be adjusted and, hence, the position of the needle (33) to be adjusted relative to the injector (13).

5. Device according to claim 1, characterised in that the valve (37) is a pressure modulation valve of the dilating bellows type (47), which valve is provided with a seat in the extension of the injector-carrying tube (36) and comprises a flap (41) facing said seat, capable of modulating the pressure of the gas delivered into said injector-carrying tube, and against which the end of the rod (50) opposite the needle (54; 55) is supported, said device comprising:
- a spring (51) disposed around the rod (50) between two abutments (52, 53) which are respectively integral, on the injector (35) side, with the injector-carrying tube (36) and, on the opposite side, with the rod (50), so as to maintain said rod in permanent contact with the flap (41);
- a slow-running pre-injector (56), disposed on a by-pass of the seat of the valve (37), suitable for creating a loss of charge which permits, in the closed position of the flap (41), a gas pressure to be obtained inside the injector-carrying tube (36) corresponding to the slow-running setting.

6. Device according to claim 5, characterised in that the slow-running pre-injector (56) is disposed "head-to-tail", so that the opening of its conical end is the one in the direction of the gas inlet.

7. Device according to one of claims 5 or 6, characterised in that the valve (37) comprises sealing means formed by a diaphragm (44).

8. Device according to claim 7, characterised in that the valve (37) comprises secondary sealing means formed by an O-ring (49).

9. Device according to one of the preceding claims, characterised in that, on the one hand, the valve body (16; 38) comprises a front threaded bore which communicates with the duct (17; 39) provided in said valve body and, on the other hand, the injector-carrying tube (14; 36) has a stub with a threaded end, suitable for permitting said injector-carrying tubes and valve bodies to be made integral by screwing, said threaded stub comprising an annular groove which accommodates an O-ring (18; 40), and said bore and threaded stub being initially coated with a sealing and slow-setting self-locking product, so as to permit the relative position of the injector-carrying tube (14; 36) and of the valve body (16; 38) to be pre-set by the pressure of the gas.
